# EUROPEAN PATENT APPLICATION

(11) **EP 4 427 936 A1**
(43) Date of publication of application: **11.09.2024**
(21) Application number: 22887238.8
(22) Date of filing: 01.11.2022
(51) Int. Cl.: B32B 27/32, B65D 65/40

(54) **LAMINATE AND LAMINATE PRODUCTION METHOD**

(30) Priority: 01.11.2021 JP 2021179034
(71) Applicant: Japan Polyethylene Corporation, Tokyo 100-8251 (JP)
(72) Inventor: KAWAMURA MASUMURA Chiaki, Kawasaki-shi, Kanagawa 210-8548 (JP); UTO Yuichi, Kawasaki-shi, Kanagawa 210-8548 (JP); SAITOU Yoshimasa, Kawasaki-shi, Kanagawa 210-8548 (JP); IWAMOCHI Hirotoshi, Kawasaki-shi, Kanagawa 210-8548 (JP); JIN Zhengzhe, Kawasaki-shi, Kanagawa 210-8548 (JP); SAKAMOTO Shinji, Kawasaki-shi, Kanagawa 210-8548 (JP)
(74) Representative: Hoffmann Eitle
(86) International application number: PCT/JP2022/040907
(87) International publication number: WO 2023/074913

(57) **Abstract**

Provided is a laminate excellent in both adhesiveness to a substrate or the like and easy-openability such as easy-tearability, and a laminate production method.

The laminate comprises at least four layers which are, respectively, a substrate layer 1(α), a resin layer (β), an adhesive agent layer (γ) and a substrate layer 2 (δ). The substrate layer 1(α), the resin layer (β), the adhesive agent layer (γ) and the substrate layer 2(δ) are laminated adjacent to one another, and the resin layer (β) and the adhesive agent layer (γ) satisfy, respectively, the following characteristics:
resin layer (β): comprising a polyethylene resin composition (B) containing an ethylene-based copolymer (A) having characteristics (a-1) to (a-4), and
adhesive agent layer (γ): comprising a reaction product of a polyol compound and a polyisocyanate compound.

## Description

### Technical Field

The present invention relates to a laminate and a laminate production method, and more particularly to a laminate including a first substrate layer, a resin layer containing a polyethylene resin composition made from a specific ethylene-based copolymer and the like, an adhesive agent layer containing a reaction product of a specific compound, and a second substrate layer, a method for producing the laminate, and a packaging material obtained using the laminate.

### Background Art

For improving the content preserving properties of packagings, containers and the like, laminates have been heretofore used in which a metal foil having barrier properties, such as an aluminum foil, a plastic film vapor-coated with a metal, an inorganic substance or an organic substance, a barrier-coated plastic film or paper substrate, a film of a barrier material such as an ethylene/vinyl alcohol copolymer, or a laminated film including the materials of the same type or different types.

In these laminates, polyethylene-based resin compositions made from high-pressure low-density polyethylene (LDPE), an ethylene/vinyl acetate copolymer (EVA) or the like have been used for heat-sealing layers. In recent years, for improving the heat-sealing strength, low-temperature heat-sealing properties, hot tack properties, impact resistance, pinhole resistance and the like of these laminates, linear low-density polyethylene (LLDPE), particularly LLDPE polymerized with a metallocene catalyst, has been proposed to be used, and has come into wide use as sealants for soft packaging, paper containers for liquid, and the like. However, in the case of easily tearable packaging applications, there are problems such as requirement of much power for opening and elongation of a resin layer because of poor tearability. In addition, for containers having a straw hole, such as paper containers for liquid, there are problems such as poor straw penetrability.

For production of these laminates, a dry lamination method, coextrusion molding or extrusion lamination molding is used. The extrusion lamination molding involves or does not involve application of an adhesive, and in either case, stable and high adhesive strength is required.

Many attempts have been made to solve such problems, and for example, a laminate of LLDPE polymerized with a metallocene catalyst and LLDPE polymerized with a Ziegler catalyst has been proposed (see Patent Literature 1). In this laminate, the tearability is somewhat improved by the LLDPE polymerized with a Ziegler catalyst, but the elongation of the LLDPE layer polymerized with a metallocene catalyst cannot be eliminated, and more importantly, heat-sealing properties are heavily sacrificed. Therefore, the approach cannot be desirable, and bonding to a substrate is not described.

Further, an invention has been proposed in which LDPE having a specific swell ratio is blended in LLDPE polymerized with a metallocene catalyst (see Patent Literature 2). However, it cannot be said that acceptable heat-sealing strength and tearing balance are achieved, and Patent Literature 2 does not describe an adhesive property to a substrate.

In addition, Patent Literature 3 from the present applicant discloses an invention in which an ethylene terpolymer containing ethylene, propylene, 1-hexene or 1-octene as essential components and LDPE are blended (see Patent Literature 3), but piercing properties and adhesive property are not described.

As a method using no adhesive, a method using a polyethylene-based resin exhibiting specific physical properties or containing a specific copolymer (see Patent Literature 4) has been proposed, but Patent Literature 4 does not either describe adhesive strength and tearability or disclose achievement of both excellent adhesive strength and excellent tearability.

### Citation List

### Patent Literature

Patent Literature 1: JP H10-24539 A
Patent Literature 2: JP 2000-212339 A
Patent Literature 3: JP 2006-82547 A
Patent Literature 4: JP 2001-191452 A

### Summary of Invention

### Technical Problem

In view of the problems described above, an object of the present invention is to provide a laminate excellent in both adhesive property to a substrate or the like and easy-openability such as easy-tearability, and a laminate production method.

Another object of the present invention is to provide a packaging material obtained using such a laminate.

### Solution to Problem

The present inventors have intensively conducted studies for solving the above-described problems, and resultantly discovered that a laminate including at least four layers including a resin layer with a polyethylene resin composition containing an ethylene-based copolymer having the following physical properties (a-1) to (a-4), that is, an ethylene-based copolymer which contains predetermined amounts of ethylene as a main component and an accessory component other than ethylene and in which MFR, a total amount of melting heat and a crystallization temperature are within certain ranges, and an adhesive agent layer containing a reaction product of a polyol compound and a polyisocyanate compound has an excellent adhesive property and excellent easy-tearability, both of which are achieved to exhibit excellent content protecting performance and handleability, and such a laminate is suitably used as a packaging material, leading to completion of the present invention.

That is, a first invention of the present invention provides a laminate comprising at least four layers which are, respectively, a substrate layer 1(α), a resin layer (β), an adhesive agent layer (γ) and a substrate layer 2 (δ), wherein the substrate layer 1(α), the resin layer (β), the adhesive agent layer (γ) and the substrate layer 2(δ) are laminated adjacent to one another, and the resin layer (β) and the adhesive agent layer (γ) satisfy, respectively, the following characteristics:
resin layer (β): comprising a polyethylene resin composition (B) containing an ethylene-based copolymer (A) having the following characteristics (a-1) to (a-4):
   (a-1) MFR (190°C, 21.18 N load) is 0.1 to 100 g/10 min,
   (a-2) a total amount of melting heat ΔHm is 30 to 120 J/g in DSC,
   (a-3) a crystallization temperature Tc is 25 to 90°C, and
   (a-4) containing 70 to 98 mol% of constituent units derived from ethylene as a main component, and 2 to 30 mol% of constituent units derived from a monomer having a polar group as an essential accessory component, and
adhesive agent layer (γ): comprising a reaction product of a polyol compound and a polyisocyanate compound.

A second invention of the present invention provides the laminate according to the first invention, wherein the polyethylene resin composition (B) contains a polyethylene resin (C) having the following characteristics (c-1) to (c-2) :
(c-1) MFR (190°C, 21.18 N load) is 0.1 to 100 g/10 min, and
(c-2) a density is 0.91 to 0.97 g/cm³.

A third invention of the present invention is to provide the laminate according to the second invention, wherein a content ratio between the ethylene-based copolymer (A) and the polyethylene resin (C) (weight ratio A : C) in the polyethylene resin composition (B) is 98 to 2 : 2 to 98.

A fourth invention of the present invention provides the laminate according to any one of the first to third inventions, wherein the polyethylene resin composition (B) further satisfies the following characteristics (b-1) and (b-2) :
(b-1) MFR (190°C, 21.18 N load) is 1 to 100 g/10 min, and
(b-2) a density is 0.90 to 0.96 g/cm³.

A fifth invention of the present invention provides the laminate according to any one of the first to fourth inventions, wherein the ethylene-based copolymer (A) further satisfies the following characteristic (a-5):
(a-5) containing 80 to 98 mol% of constituent units derived from ethylene as a main component, and 2 to 20 mol% of constituent units derived from a monomer having a polar group as an essential accessory component.

A sixth invention of the present invention provides the laminate according to any one of the first to fifth inventions, wherein an oxygen permeability of the substrate layer 1(α) is 1,300 mL/m²·day·MPa or less at 20°C and 65% RH.

A seventh invention of the present invention provides the laminate according to any one of the first to sixth inventions, wherein the laminate is formed by an extrusion coating method.

An eighth invention of the present invention provides a packaging material obtained using the laminate according to any one of the first to seventh inventions.

### Advantageous Effects of Invention

The present invention provides a laminate and a laminate production method, and the laminate exhibits good bondability to a substrate or the like, and good easy-tearability, and has excellent content protecting performance and openability. In addition, the adhesive strength is improved, so that the high-rate processability of the laminate can also be improved.

In addition, a packaging material obtained using the laminate of the present invention has excellent adhesive property and excellent easy-tearability, and can be suitably used for various applications such as films for easily tearable packaging bags, films for food packaging, paper containers for liquid, containers for packaging frozen confectionery such sweet bean jelly and jelly, dry food, fat/oil and confectionery, paper bundling, paper cups, and paper trays.

### Description of Embodiments

The present invention provides a laminate including at least four layers which are, respectively, a substrate layer 1(α), a resin layer (β), an adhesive agent layer (γ) and a substrate layer 2(δ). The substrate layer 1(α), the resin layer (β), the adhesive agent layer (γ) and the substrate layer 2(δ) are laminated adjacent to one another. The resin layer (β) contains a polyethylene resin composition (B) containing an ethylene-based copolymer (A) having the following characteristics (a-1) to (a-4), and (a-5) if necessary, and a polyethylene resin (C) having the following characteristics (c-1) and (c-2), and the adhesive agent layer (γ) contains a specific compound.

Hereinafter, the present invention will be described in detail item by item.

### 1. Polyethylene resin composition (B)

### (1) Ethylene-based copolymer (A)

The ethylene-based copolymer (A) for use in the present invention satisfies all of the following characteristics (a-1) to (a-4), and has a characteristic (a-5) if necessary.

### (a-1) Melt flow rate (MFR)

The melt flow rate of the ethylene-based copolymer (A) for use in the present invention (MFR: 190°C, load: 21.18 N) is 0.1 to 100 g/10 min, preferably 1 to 80 g/10 min, and more preferably 2 to 70 g/10 min. An MFR of less than 0.1 g/10 min is not preferable because extensibility during molding is deteriorated, leading to an increase in load on a motor in an extrusion machine. On the other hand, an MFR of more than 100 g/10 min is not preferable because the state of a molten film during molding is destabilized. The MFR of the ethylene-based copolymer is adjusted by, for example, a method in which the polymerization temperature, the comonomer amount, or the like is appropriately adjusted.

Here, the MFR is a value measured according to JIS-K6922-2: 1997, Appendix (190°C, load: 21.18 N).

### (a-2) Total amount of melting heat ΔHm

The total amount of melting heat ΔHm of the ethylene-based copolymer (A) for use in the present invention is 30 to 120 J/g, preferably 32 to 118 J/g, and more preferably 35 to 115 J/g. A ΔHm of less than 30 J/g is not preferable because blocking becomes insufficient. On the other hand, a ΔHm of more than 120 J/g is not preferable because adhesive property becomes insufficient. For adjusting the ΔHm of the ethylene-based copolymer, for example, a method is employed in which the content of a comonomer, the polymerization temperature, the amount of a catalyst, or the like is appropriately adjusted.

Here, ΔHm indicates the amount of melting heat in a melting curve with a differential scanning calorimeter (DSC). In general, an ethylene-based resin having low crystallinity tends to have a broader melting peak and smaller ΔHm as compared to an ethylene-based resin having high crystallinity.

### (a-3) Crystallization temperature Tc

The crystallization temperature Tc of the ethylene-based copolymer (A) for use in the present invention is 25 to 90°C, preferably 27 to 88°C, and more preferably 30 to 85°C. A Tc of lower than 25°C is not preferable because the crystallinity is excessively low, resulting in insufficient blocking. On the other hand, a Tc of higher than 90°C is not preferable because a high-crystalline component is present, resulting in insufficient adhesiveness.

Here, Tc indicates a temperature corresponding to the largest of crystallization peaks in a crystallization curve with a differential scanning calorimeter (DSC).

### (a-4) Monomer composition of ethylene-based copolymer (A)

The ethylene-based copolymer for use in the present invention is an ethylene-based copolymer containing 70 to 98 mol% of constituent units derived from ethylene as a main component and 2 to 30 mol% of constituent units derived from a monomer having a polar group as an essential accessory component. It is preferable that the amount of constituent units derived from ethylene is 72 to 97 mol%, and the amount of constituent units derived from a monomer having a polar group is 3 to 28 mol%, and it is more preferable that the amount of constituent units derived from ethylene is 75 to 95 mol%, and the amount of constituent units derived from monomer having a polar group is 5 to 25 mol%. It is not preferable that the amount of the constituent unit derived from ethylene is less than 70 mol% because blocking becomes insufficient. It is not preferable that the amount of the constituent unit derived from ethylene is more than 98 mol% because adhesiveness becomes insufficient.

Here, the monomer amount such as an ethylene content is a value obtained by performing measurement by ¹³C-NMR under conditions described in the example section described later, followed by calculation.

Note that for the type of comonomer, the comonomer may be of one type or a combination of two or more types as long as (a-1) to (a-4) and further, preferably (a-5) are satisfied, and the ethylene-based copolymer (A) may be of one type or a combination of two or more types as long as (a-1) to (a-4) and further, preferably (a-5) are satisfied.

Specific examples of the comonomer include acids and ester compounds such as vinyl acetate, methyl acrylate, ethyl acrylate, methyl methacrylate, maleic anhydride, methacrylic acid and metal ion-containing methacrylic acid.

The comonomer may be of one type or a combination of two or more types.

### (a-5) Accessory component derived from monomer having polar group

The ethylene-based copolymer (A) for use in the present invention is an ethylene-based copolymer containing 80 to 98 mol% of constituent units derived from ethylene as a main component and 2 to 20 mol% of constituent units derived from a monomer having a polar group as an accessory component, and a specific example thereof is a copolymer obtained by performing polymerization by a high-pressure radical polymerization method. It is preferable that the amount of constituent units derived from ethylene is 82 to 97 mol%, and the amount of constituent units derived from a monomer having a polar group is 3 to 18 mol%, and it is more preferable that the amount of constituent units derived from ethylene is 85 to 95 mol%, and the amount of constituent units derived from monomer having a polar group is 5 to 15 mol%. Here, the monomer amount such as an ethylene content is a value obtained by performing measurement by ¹³C-NMR under conditions described in examples described later, followed by calculation.

Note that examples of the type of comonomer include acids and ester compounds such as vinyl acetate, methyl acrylate, ethyl acrylate, methyl methacrylate, maleic anhydride, methacrylic acid and metal ion-containing methacrylic acid.

The comonomer may be of one type or a combination of two or more types.

### <Method for polymerizing ethylene-based copolymer (A)>

The method for producing the ethylene-based copolymer (A) for use in the present invention, which satisfies (a-1) to (a-4), is not limited, and may be a high-pressure radical polymerization method, a high-pressure ion polymerization method, a gas phase method, a solution method, a slurry method, or the like.

On the other hand, the method for producing the ethylene-based copolymer (A) satisfying (a-1) to (a-4) and further, preferably (a-5) is not limited, and for example, a high-pressure radical polymerization method can be suitably used.

### (2) Polyethylene resin (C)

The polyethylene resin (C) contained in the polyethylene resin composition (B) in the present invention is polyethylene having the following characteristics (c-1) to (c-2), and preferably low-density polyethylene.

### (c-1) Melt flow rate (MFR)

The melt flow rate (MFR) of the ethylene-based copolymer (C) for use in the present invention is 0.1 to 100 g/10 min, preferably 0.5 to 50 g/10 min, and more preferably 1 to 20 g/10 min. If MFR is less than 0.1 g/10 minutes, the extensibility becomes insufficient, so that film breakage occurs during high-rate molding. On the other hand, if MFR is more than 100 g/10 min, the molten film is destabilized.

Here, MFR is a value measured according to JIS-K7210 (190°C, load: 21.18 N).

### (c-2) Density

The density of the polyethylene resin (C) for use in the present invention is 0.91 to 0.97 g/cm³, preferably 0.915 to 0.96 g/cm³, and more preferably 0.916 to 0.95 g/cm³. A density of less than 0.91g/cm³ leads to heavy stickiness. On the other hand, a density of more than 0.97 g/cm³ leads to insufficient adhesiveness.

Here, the density is measured according to JIS-K6922-2: 1997, Appendix (for low-density polyethylene) (23°C).

The method for producing the polyethylene resin (C) for use in the present invention is not limited, and may be a high-pressure radical polymerization method, a high-pressure ion polymerization method, a gas phase method, a solution method, a slurry method, or the like. Note that low-density polyethylene is produced by polymerizing ethylene under conditions of a polymerization pressure of 1,000 to 3,000 kg/cm² and a polymerization temperature of 150 to 300°C in the presence of a radical generator typically by using a tank-type reactor or a tube-type reactor. MFR can be adjusted by using hydrogen or a hydrocarbon such as methane or ethane as a molecular weight adjuster.

### (3) Content ratio of ethylene-based copolymer (A) and polyethylene resin (C)

In the polyethylene resin composition (B) for use in the present invention, the content ratio (weight ratio) of the ethylene-based copolymer (A) and the polyethylene resin (C) on an (A) : (C) basis is 98 to 2 : 2 to 98, preferably 90 to 2 : 10 to 98, and more preferably 80 to 2 : 20 to 98. The content ratio is still more preferably 70 to 5 : 30 to 95, and an excessively large content of the ethylene-based copolymer (A) deteriorates the stability of a molten film.

In particular, the content ratio (weight ratio) of the ethylene-based copolymer (A) and the polyethylene resin (C) is preferably :50 to 5 : 50 to 95, more preferably 40 to 5 : 60 to 95 because the adhesive strength and the stability of a molten film are well balanced.

### (4) Characteristics of polyethylene resin composition (B)

### (b-1) Melt flow rate (MFR)

The melt flow rate of the polyethylene resin composition (B) for use in the present invention (MFR: 190°C, load: 21.18 N) is 1 to 100 g/10 min, preferably 1 to 80 g/10 min, and more preferably 2 to 70 g/10 min. An MFR of less than 1 g/10 min is not preferable because extensibility during molding is deteriorated, leading to an increase in load on a motor in an extrusion machine. On the other hand, an MFR of more than 100 g/10 min is not preferable because the state of a molten film during molding is destabilized.

Here, the MFR is a value measured according to JIS-K6922-2: 1997, Appendix (190°C, load: 21.18 N).

### (b-2) Density

The density of the polyethylene resin composition (B) for use in the present invention is 0.90 to 0.96 g/cm³, preferably 0.91 to 0.955 g/cm³, and more preferably 0.91 to 0.95 g/cm³. A density of less than 0.90 g/cm³ is not preferable because blocking becomes insufficient. On the other hand, a density of more than 0.96 g/cm³ is not preferable because adhesive property becomes insufficient.

### (5) Other components blended

In the polyethylene resin composition (B) for use in the present invention or the resin layer (β) containing the polyethylene resin composition (B), additives such as antioxidants typically used for polyethylene-based resins, such as phenol-based and phosphorus-based antioxidants, stabilizers such as metal soaps, antiblocking agents, slipping agents, dispersants, pigments such as organic and inorganic colorants, antifogging agents such as unsaturated fatty acid esters, antistatic agents, ultraviolet absorbers, light stabilizers and nucleating agents may be blended as necessary. The amount of the additive added is preferably 700 ppm or less, more preferably 400 ppm or less, still more preferably 200 ppm or less, and most preferably 100 ppm or less. An excessively large amount of the additive is not preferable because adhesiveness becomes insufficient.

Other thermoplastic resins such as polyethylene-based resins such as LDPE, C4-LLDPE, HAO-LLDPE, an ethylene-vinyl acetate copolymer (EVA), an ethylene-acrylic acid copolymer (EAA), an ethylene-methacrylic acid copolymer (EMAA), an ethylene-acrylic acid ester copolymer (EEA, EMA, EMMA, etc.) and high density polyethylene (HDPE), adhesive resins such as an ethylene-maleic anhydride copolymer, polypropylene-based resins, and polystyrene resins may be blended in the resin layer (β) as long as the characteristics of the resin layer (β) are not impaired.

### 2. Adhesive agent layer (γ)

The adhesive agent layer (γ) for use in the present invention contains a reaction product of a polyol compound and a polyisocyanate compound. The adhesive agent layer (γ) for use in the present invention can be obtained by directly depositing an adhesive containing a reaction product of a polyol compound and a polyisocyanate compound on a substrate layer 2(δ) by known means such as application or extrusion, and curing the adhesive. Such an adhesive is preferably a two-liquid curable polyurethane resin-based adhesive. Both adhesiveness and easy-tearability can be secured by using an adhesive containing a reaction product of a polyol compound and a polyisocyanate compound as the adhesive agent layer (γ).

For the resulting adhesive agent layer (γ), an adhesive containing a reaction product of a polyol compound and a polyisocyanate compound and heretofore used in an extrusion coating method or a dry lamination method can be used.

The polyol is a polyol component having at least two hydroxyl groups in the molecule. Examples of such a polyol component include polyurethane polyols, polyester polyols, polyether polyols, acrylic polyols, and resin composition polyols for lamination, and these polyol components may be used alone or in combination of two or more thereof.

Examples of the isocyanate component having at least two isocyanate groups in the molecule include araliphatic diisocyanates, aliphatic diisocyanates, and alicyclic diisocyanates. Specific examples of the araliphatic diisocyanate include 1,3- or 1,4-xylylene diisocyanate or mixtures thereof, 1,3- or 1,4-bis(1-isocyanato-1-methylethyl) benzene or mixtures thereof, and ω,ω'-diisocyanato-1,4-diethylbenzene. Specific examples of the aliphatic diisocyanate include hexamethylene diisocyanate, tetramethylene diisocyanate, 2-methyl-pentane-1,5-diisocyanate, 3-methyl-pentane-1,5-diisocyanate, lysine diisocyanate, and trioxyethylene diisocyanate. Specific examples of the alicyclic diisocyanate include isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethyl xylene diisocyanate. These isocyanate components may be used alone or in combination of two or more thereof.

Specific examples include A-3210/A-3070, A-3210/A3072 and A-3210/A-3075 (manufactured by Mitsui Chemicals, Inc.), SEIKADYNE 2710A/SEIKADYNE 2810C(T), SEIKADYNE 2730A/SEIKADYNE 2730B and SEIKADYNE 2710A/SEIKADYNE 2710C (manufactured by Dainichiseika Color & Chemicals Mfg.Co.,Ltd.), EL-510/CAT-RT80, EL-530 A/EL-530B and EL-540/CAT-RT32 (manufactured by Toyo Morton Co., Ltd.), and T-120 A/T-300 curing agents, T-150/T-122 and T-160/T-125 (manufactured by Nippon Soda Co., Ltd.) as adhesives used in extrusion lamination processing (anchor coating agents), and DICDRY LX-401A, 75A, 719, 703VL, 500 and 510 (manufactured by DIC Graphics Corporation), TAKELAC/TAKENATE A-909/A-5, A-977/A-92, A-606/A-50, A-515/A-50, A-626/A-50, A-525/A-52 and A-666/A-65 (manufactured by Mitsui Chemicals, Inc.), and RU-77, 771, 3600 and 3900 (manufactured by ROCK PAINT Co.,Ltd.) as adhesives used in dry lamination processing. It is particularly preferable to use A-3210/A-3070, A-3210/A3072 and A-3210/A-3075 (manufactured by Mitsui Chemicals, Inc.), SEIKADYNE 2710A/SEIKADYNE 2810C(T) and SEIKADYNE 2710A/SEIKADYNE 2710C (manufactured by Dainichiseika Color & Chemicals Mfg. Co., Ltd.), EL-510/CAT-RT80 and EL-540/CAT-RT32 (manufactured by Toyo Morton Co., Ltd.), and the like.

### 3. Substrate layer 1(α) and substrate layer 2(δ)

Examples of the substrate layer 1(α) and the substrate layer 2(δ) for use in the present invention include single-layer films or sheets of polyamide, polyester, polypropylene, polyethylene, an ethylene-vinyl alcohol copolymer, polyvinylidene chloride, polycarbonate or the like, laminated films or laminated sheets including the materials of the same type or different types, stretched products of any of the films or sheets, paper such as kraft paper, metal foils or metal plates of aluminum, iron, copper, or an alloy containing any of these metals as a main component, plastic films or sheets vapor-coated with a metal, an inorganic substance or an organic substance, cellophane, woven fabrics, nonwoven fabrics, and barrier-coated paper or plastic films. The types of the substrate layer 1(α) and the substrate layer 2(δ) may be the same or different.

Among the above-described materials, metal foils or metal plates of aluminum, iron, copper, or an alloy containing any of these metals as a main component, plastic films or sheets vapor-coated with a metal, an inorganic substance or an organic substance, and barrier-coated paper or plastic films are preferable as the substrate layer 1(α) from the viewpoint of protection of contents.

The substrate layer 1(α) for use in the present invention is preferably a substrate having an oxygen permeability of 1,300 mL/m²·day·MPa or less, more preferably 400 mL/m²·day·MPa or less at 20°C and 65% RH. By using the substrate for the substrate layer 1(α), a laminate having good content protecting performance can be obtained.

The substrate layer 1(α) and the substrate layer 2(δ) may be printed, or coated in various forms.

### 4. Laminate

The laminate of the present invention includes at least four layers which are, respectively, a substrate layer 1(α), a resin layer (β), an adhesive agent layer (γ) and a substrate layer 2 (δ). The substrate layer 1(α), the resin layer (β), the adhesive agent layer (γ) and the substrate layer 2(δ) are laminated adjacent to one another.

The laminate of the present invention may include additional layers as long as it has the above-described configuration. For example, different resin layers and/or different substrate layers may be present on the outer side of the substrate layer 1(α) and/or the substrate layer 2(δ).

Here, examples of the different resin layer include LDPE, C4-LLDPE, HAO-LLDPE, an ethylene-vinyl acetate copolymer (EVA), an ethylene-acrylic acid copolymer (EAA), an ethylene-methacrylic acid copolymer (EMAA), an ethylene-acrylic acid ester copolymer (EEA, EMA, EMMA, etc.) and high density polyethylene (HDPE), adhesive resins such as an ethylene-maleic anhydride copolymer, polypropylene-based resins, and polystyrene resins.

Examples of the different substrate layer include single-layer films or sheets of polyamide, polyester, polypropylene, polyethylene, an ethylene-vinyl alcohol copolymer, polyvinylidene chloride, polycarbonate or the like, laminated films or laminated sheets including the materials of the same type or different types, stretched products of any of the films or sheets, paper such as kraft paper, metal foils or metal plates of aluminum, iron, copper, or an alloy containing any of these metals as a main component, plastic films or sheets vapor-coated with a metal, an inorganic substance or an organic substance, cellophane, woven fabrics, nonwoven fabrics, and barrier-coated paper or plastic films.

The method for producing the laminate is not limited, but is preferably a so-called extrusion coating method in which a polyethylene resin composition is melted, extruded and laminated on a substrate layer. In addition, in the extrusion coating, one or more layers are preferably laminated by a method such as a single layer method, sandwich lamination, coextrusion lamination, or tandem lamination. The present invention enables high-rate molding because of good adhesiveness to the substrate.

The method for securing adhesiveness between the substrate layer 1(α) and the resin layer (β) is not particularly limited. For example, surface treatment, and anchor coating treatment if necessary, can be performed on the surface of the substrate. Examples of the surface treatment method include various treatment methods such as a corona discharge treatment method, an ozone treatment method, a frame treatment method, and a low-temperature plasma treatment method. Another example is a method in which ozone is sprayed to a molten resin.

An aspect of the method for producing the laminate of the present invention is a method in which in an extrusion lamination molding machine, the substrate layer 2(δ) is fed from a feeder, the polyethylene resin composition (B) is extruded and molded to form a resin layer (β) with a predetermined thickness, the substrate layer 1(α) is fed from the sandwich side to form the adhesive agent layer (γ) on a surface of the substrate layer 2(δ) on the resin layer (β) side, and extrusion sandwich lamination processing is performed to produce a laminate including at least four layers which are, respectively, the substrate layer 1(α), the resin layer (β), the adhesive agent layer (γ) and the substrate layer 2(δ).

Here, the polyethylene resin composition (B) contains an ethylene-based copolymer (A) and a polyethylene resin (C).

The laminate of the present invention is a laminate including a resin layer (β) containing a polyethylene resin composition (B) and an adhesive agent layer (γ) containing a specific compound, which is excellent in adhesive strength with a substrate and the like, has good handling characteristics such as an easily tearing characteristic, and is excellent in both content protecting performance and easy-openability.

The laminate of the present invention is excellent in adhesive strength with a substrate or the like and excellent in easy-tearability, and therefore can be suitably used as a packaging material (laminate for packaging).

That is, another aspect of the present invention is a packaging material (laminate for packaging) obtained using the laminate of the present invention.

Here, in the present specification, the packaging material and the packaging laminate are used synonymously. The packaging material or laminate for packaging according to the present invention is obtained by molding and processing the laminate of the present invention by a predetermined method.

Non-limiting examples of the packaging material or laminate for packaging according to the present invention include films for easily tearable packaging bags, films for food packaging, paper containers for liquid, containers for packaging frozen confectionery such sweet bean jelly and jelly, dry food, fat/oil and confectionery, paper bundling, paper cups, and paper trays.

### Examples

Hereinafter, the present invention will be described by way of examples, which should not be construed as limiting the present invention. Measurement methods, resins and adhesives used in examples and comparative examples are as follows.

### 1. Method for evaluating physical properties of resin

### (1) Melt flow rate (MFR)

The MFRs of an ethylene-based copolymer, a polyethylene resin and a polyethylene resin composition were measured according to JIS-K6922-2: 1997, Appendix (190°C, load: 21.18 N).

### (2) Density

The densities of the ethylene-based copolymer, the polyethylene resin and the polyethylene resin composition were measured according to JIS-K6922-2: 1997, Appendix (23°C, for low-density polyethylene).

### (3) Total amount of melting heat ΔHm and crystallization temperature Tc

The total amount of melting heat ΔHm and the crystallization temperature Tc of the ethylene-based copolymer were measured according to JIS-K7121-1987. Measurement samples obtained by hot-pressing pellets into a sheet and punching the sheet were used. First heating, cooling and second heating are performed in the stated order under the following conditions. A temperature corresponding to a maximum peak height during cooling is defined as Tc, and the amount of melting heat in a melting curve during second heating is defined as ΔHm.

Apparatus: DSC 7020 manufactured by SII NanoTechnology Inc.

### <Heating conditions>

- First heating: at 10°C/min from 30°C to 200°C
- Cooling: at 10°C/min from 200°C to -30°C
- Second heating: at 10°C/min from -30°C to 200°C
- Temperature holding time: 5 minutes after first heating and 5 minutes after cooling
- Sample amount: 5mg
- Temperature calibration: indium
- Reference: aluminum

### (4) Comonomer amount

The comonomer amount was measured by ¹³C-NMR under the following conditions.

Apparatus: AVANCE III cryo-400 MHz manufactured by Bruker BioSpin K.K.

Solvent: o-dichlorobenzene/deuterated bromobenzene = 8/2 mixed solution

### <Sample amount>

460 mg of sample/2.3 ml of solvent

### <¹³C-NMR>

- ¹H decoupled, with NOE
- Number of scanning times: 256 scans
- Flip angle: 90°
- Pulse interval: 20 sec·AQ (acquisition time) = 5.45 s D1 (waiting time) = 14.55 s

### (4) Adhesive strength

The obtained laminate was cut into a 15 mm-thick strip shape in a machine direction, and delaminated at an interface between a substrate layer 1(α) and a resin layer (β), and the delamination strength in a T-delamination test when the number of test samples was 5 and the delamination rate was 300 mm/min was taken as adhesive strength. In the case where the resin layer (β) was cut while the resin layer (β) was pulled and peeled from the substrate layer 1(α), a numerical value at the highest point in the chart was taken as adhesive strength.

### (5) Tearability

The cutting property when the obtained laminate was manually torn from a notch portion in each of the machine direction (MD) during processing and a direction perpendicular to the machine direction (TD) was sensorily evaluated. A sample which did not elongate and was cut without difficulty when torn was rated "o", and a sample which was partially delaminated at a tearing portion or easily peeled when torn was rated "×".

### 2. Materials

### (1) Ethylene-based copolymer (A)

(PE-1) and (PE-2) as commercially available ethylene-methyl acrylate copolymers (EMAs) were used as the ethylene-based copolymer component (A). Table 1 shows the physical property values.

### (2) Polyethylene resin (C)

A polyethylene resin (PE-3) having the physical properties shown in Table 1 was used.

### (3) Adhesive agent layer (γ)

As the adhesive agent layer (γ), (AC-1) to (AC-3) described below were used.

(AC-1) A mixture of TAKELAC A-3210 manufactured by Mitsui Chemicals, Inc., TAKENATE A-3075 manufactured by Mitsui Chemicals, Inc. and ethyl acetate at a ratio of 3 : 1 : 28 (solid content concentration: 7 wt%, containing a polyol compound and a polyisocyanate compound)

(AC-2) A mixture of SEIKADYNE 2710A and SEIKADYNE 2810C(T) (manufactured by Dainichiseika Color & Chemicals Mfg.Co.,Ltd.) and ethyl acetate at a ratio of 1 : 2 : 15.6 (solid content concentration: 7 wt%, containing a reaction product of a polyol compound and a polyisocyanate compound)

(AC-3) A mixture of ORIBAIN EL420 manufactured by Toyo Morton Co., Ltd. and ethyl acetate at a ratio of 1 : 9 (free of a polyol compound and a polyisocyanate compound)

### (4) Substrate layer 1(α)

An aluminum foil (thickness: 7 um) manufactured by Toyo Aluminium K.K. was used. Hereinafter, this is referred to as (substrate-1).

### (5) Substrate layer 2(δ)

ESPET FILM T4102 (thickness: 12 um) manufactured by Toyobo Co., Ltd. was used. Hereinafter, this is referred to as (substrate-2).

### (Example 1)

20% By weight of the ethylene-based copolymer (A) (PE-1) and 80% by weight of the polyethylene resin (C) (PE-3) were blended. These resins were sufficiently mixed, and pellets of the polyethylene resin composition (B) were obtained using a 40 mmϕ single-screw extruder.

In an extrusion lamination molding machine, (substrate-2) having a width of 500 mm was fed as the substrate layer 2(δ) from a feeder, the pellets obtained as described above were adjusted to a take-up rate of 100 m/min and a coating thickness of 15 um, and (substrate-1) was fed as the substrate layer 1(α) from the sandwich side to perform extrusion sandwich lamination. Here, anchor coating treatment was performed on a surface of the substrate layer 2(δ) on the resin layer (β) side using (AC-1) as the adhesive agent layer (γ). Next, anchor coating treatment was performed on a surface of the substrate layer 1(α) on a side opposite to the resin layer (β) using (AC-1), and LDPE (NOVATEC LC600A manufactured by Japan Polyethylene Corporation) was extruded and laminated at a take-up speed of 100 m/min to a coating thickness of 20 um to obtain a laminate of a substrate layer 2(δ), an adhesive agent layer (γ), a resin layer (β), a substrate layer 1(α) and a LC600A layer.

The extrusion lamination molding machine was set so that the temperature of the resin extruded from a T-die mounted in the extruder having an opening diameter of 90 mmϕ was 320°C, and the extrusion amount was adjusted so that the coating thickness met a specified value when the surface temperature of a cooling roll was 20°C, the die width was 560 mm and the take-up processing rate was 100 m/min. Subsequently, the adhesive strength and the tearability were evaluated using the obtained laminate. Table 1 shows the evaluation results.

### (Example 2)

A laminate was produced in the same manner as in Example 1 except that with respect to Example 1, (AC-2) was used in place of (AC-1) as the adhesive agent layer (γ). Table 1 shows the evaluation results.

### (Example 3)

A laminate was produced in the same manner as in Example 2 except that with respect to Example 2, 5% by weight of the ethylene-based copolymer (A) (PE-1) and 95% by weight of the polyethylene resin (C) (PE-3) were used. Table 1 shows the evaluation results.

### (Example 4)

A laminate was produced in the same manner as in Example 2 except that with respect to Example 2, 20% by weight of the ethylene-based copolymer (A) (PE-2) and 80% by weight of the polyethylene resin (C) (PE-3) were used. Table 1 shows the evaluation results.

### (Comparative Example 1)

A laminate was produced in the same manner as in Example 1 except that with respect to Example 1, the ethylene-based copolymer (A) was not used and the polyethylene resin composition (B) made from only the polyethylene resin (C) (PE-3) was used. Table 1 shows the evaluation results.

### (Comparative Example 2)

A laminate was produced in the same manner as in Example 1 except that with respect to Example 1, the ethylene-based copolymer (A) was not used, a polyethylene resin composition (B) made from only the polyethylene resin (C) (PE-3) was used, and (AC-3) was used in place of (AC-1) as the adhesive agent layer (γ). Table 1 shows the evaluation results.

**[Table 1]**

| | Item | Unit | Example 1 | Example 2 | Example 3 | Example 4 | Comparative Example 1 | Comparative Example 2 |
|---|---|---|---|---|---|---|---|---|
| Ethylene-based polymer (A) | Type | - | PE-1 | PE-1 | PE-1 | PE-2 | - | - |
| | Compounding ratio | wt% | 20 | 20 | 5 | 20 | - | - |
| | MFR | g/10 min | 20 | 20 | 20 | 10 | - | - |
| | Density (X) | g/cm³ | 0.941 | 0.941 | 0.941 | 0.931 | - | - |
| | Total amount of melting heat ΔHm | J/g | 55 | 55 | 55 | 96 | - | - |
| | Crystallization temperature Tc | °C | 60 | 60 | 60 | 79 | - | - |
| Polyethylene resin (C) | Type | - | PE-3 | PE-3 | PE-3 | PE-3 | PE-3 | PE-3 |
| | Compounding ratio | wt% | 80 | 80 | 95 | 80 | 100 | 100 |
| | MFR | g/10 min | 7 | 7 | 7 | 7 | 7 | 7 |
| | Density | g/cm³ | 0.918 | 0.918 | 0.918 | 0.918 | 0.918 | 0.918 |
| Polyethylene resin composition (B) | MFR | g/10 min | 9 | 9 | 7 | 8 | 7 | 7 |
| | Density | g/cm³ | 0.923 | 0.923 | 0.920 | 0.921 | 0.918 | 0.918 |
| Ethylene-based copolymer (A) | C2 content | mol% | 92.5 | 92.5 | 92.5 | 95.7 | 1000 | 100.0 |
| Composition property | MA content | mol% | 7.5 | 7.5 | 7.5 | 4.3 | - | - |
| Adhesive agent layer (γ) | Type | - | AC-1 | AC-2 | AC-2 | AC-2 | AC-1 | AC-3 |
| Quality | Adhesive strength substrate layer (α) | N/15 mm | 8.4* | 9.6* | 4.3 | 6.8* | 1.5 | 1.2 |
| | Tearability | - | ○ | ○ | ○ | ○ | ○ | × |

| | | | | | | | | |
|---|---|---|---|---|---|---|---|---|
| *Sample broken during measurement of adhesive strength | | | | | | | | |

As is evident from the results in Table 1, the laminates of examples in the present invention are excellent in easy-tearability and excellent in adhesive strength with a substrate.

On the other hand, in the case where only the polyethylene resin (C) was used (Comparative Examples 1 and 2), good adhesive strength was not obtained, and in particular, the laminate including the adhesive agent layer (γ) free of a reaction product of a polyol compound and a polyisocyanate compound (Comparative Example 2) had poor tearability as well.

### Industrial applicability

The laminate of the present invention can be used for packaging materials (laminates for packaging), specifically, easily tearable packaging bags, films for food packaging, paper containers for liquid, containers for packaging frozen confectionery such sweet bean jelly and jelly, dry food, fat/oil and confectionery, paper bundling, paper cups, paper trays, and the like.

## Claims

1. A laminate comprising at least four layers which are, respectively, a substrate layer 1(α), a resin layer (β), an adhesive agent layer (γ) and a substrate layer 2(δ), wherein
the substrate layer 1(α), the resin layer (β), the adhesive agent layer (γ) and the substrate layer 2(δ) are laminated adjacent to one another, and the resin layer (β) and the adhesive agent layer (γ) satisfy, respectively, the following characteristics:
resin layer (β): comprising a polyethylene resin composition (B) containing an ethylene-based copolymer (A) having the following characteristics (a-1) to (a-4):
(a-1) MFR (190°C, 21.18 N load) is 0.1 to 100 g/10 min,
(a-2) a total amount of melting heat ΔHm is 30 to 120 J/g in DSC,
(a-3) a crystallization temperature Tc is 25 to 90°C, and
(a-4) containing 70 to 98 mol% of constituent units derived from ethylene as a main component, and 2 to 30 mol% of constituent units derived from a monomer having a polar group as an essential accessory component, and
adhesive agent layer (γ): comprising a reaction product of a polyol compound and a polyisocyanate compound.

2. The laminate according to claim 1, wherein the polyethylene resin composition (B) comprises a polyethylene resin (C) having the following characteristics (c-1) to (c-2) :
(c-1) MFR (190°C, 21.18 N load) is 0.1 to 100 g/10 min, and
(c-2) a density is 0.91 to 0.97 g/cm³.

3. The laminate according to claim 2, wherein a content ratio between the ethylene-based copolymer (A) and the polyethylene resin (C) (weight ratio A : C) in the polyethylene resin composition (B) is 98 to 2 : 2 to 98.

4. The laminate according to any one of claims 1 to 3, wherein the polyethylene resin composition (B) further satisfies the following characteristics (b-1) and (b-2):
(b-1) MFR (190°C, 21.18 N load) is 1 to 100 g/10 min, and
(b-2) a density is 0.90 to 0.96 g/cm³.

5. The laminate according to any one of claims 1 to 4, wherein the ethylene-based copolymer (A) further satisfies the following characteristic (a-5):
(a-5) containing 80 to 98 mol% of constituent units derived from ethylene as a main component and 2 to 20 mol% of constituent units derived from a monomer having a polar group as an essential accessory component.

6. The laminate according to any one of claims 1 to 5, wherein an oxygen permeability of the substrate layer 1(α) is 1,300 mL/m²·day·MPa or less at 20°C and 65% RH.

7. The laminate according to any one of claims 1 to 6, wherein the laminate is formed by an extrusion coating method.

8. A packaging material obtained using the laminate according to any one of claims 1 to 7.
